# EUROPEAN PATENT APPLICATION

(11) **EP 4 098 115 A1**
(43) Date of publication of application: **07.12.2022**
(21) Application number: 21202855.9
(22) Date of filing: 15.10.2021
(51) Int. Cl.: A01M 1/02

(54) **A DEVICE FOR IDENTIFYING INSECTS**

(30) Priority: 01.06.2021 IT 202100014375
(71) Applicant: Claret S.r.l., 10146 Torino (TO) (IT)
(72) Inventor: Solinas, Francesco Maria, 10146 Torino TO (IT); Iannucci, Simone, 10146 Torino TO (IT); D'Anselmo, Gabriel Patrizio, 10146 Torino TO (IT)
(74) Representative: Perani & Partners S.p.A.

(57) **Abstract**

A device (1) for identifying insects comprises a passage (2) for an insect having an inlet opening (19) in communication with the external environment and an outlet opening (12) configured to be placed in communication with attraction means for one or more insect species, the passage (2) has an identification zone (2a) located between the inlet opening (19) and the outlet opening (12); image acquisition means (20) are associated with the identification zone (2a) and configured to detect at least one image of an insect transiting in the identification zone; recognition means (23) are associated with the image acquisition means (20) and are configured to process insect images to identify the species and/or sex of the insect present in the image.

## Description

The present invention relates to a device for identifying insects, in particular flying insects and even more in particular mosquitoes.

It has long been known that certain insect species are reserves and/or vectors of pathogenic microorganisms of major epidemiological importance. By way of example, some mosquito-borne diseases are malaria, Chikungunya, Filariasis, Dirofilariasis, dengue fever, Zika, West Nile fever, yellow fever, various forms of encephalitis and others.

Disadvantageously, although efforts to curb the above-mentioned diseases and their insect vectors have multiplied over the years, the successes have been limited. Therefore, the problem has been posed of more accurately monitoring the vital and migratory cycles of the most relevant mosquito species, so as to concentrate the efforts of containment and disinfestation in the times and places where they can be most effective.

### SUMMARY OF THE INVENTION

In this context, the technical task underlying the present invention is to propose a device for identifying insects which overcomes the drawbacks of the prior art mentioned above.

The mentioned technical task and the specified objects are substantially achieved by a device for identifying insects comprising the technical specifications set out in one or more of the appended claims.

In particular, a device for identifying insects according to the present invention comprises a passage for an insect having an inlet opening and an outlet opening. The inlet opening can be placed in communication with the external environment, while the outlet opening is configured to be placed in communication with attraction means for one or more species of insects.

The passage further has an identification zone located between the inlet opening and the outlet opening. Imaging means are associated with the identification zone and are configured to detect at least one image of an insect transiting in the identification zone.

The device further comprises recognition means associated with the image acquisition means and configured to process insect images to identify the species and/or sex of the insect present in the image.

The invention solves the proposed technical problem by providing a device capable of identifying insect species which are vectors of epidemics. Any eradication strategies of such insects can therefore be concentrated where they are most effective.

### LIST OF FIGURES

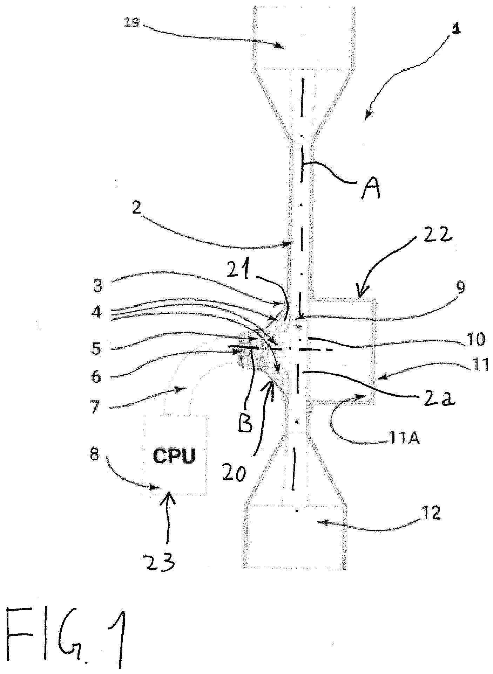

Further features and advantages of the present invention will become more apparent from the description of a preferred, but not exclusive, embodiment of a device for identifying insects, as shown in Figure 1, which shows a schematic sectional view of a device for identifying insects according to the present invention.

### DETAILED DESCRIPTION

With reference to the attached figures, 1 refers to a device for identifying insects according to the present invention. Such insects are preferably flying insects. In particular, the device 1 is adapted to identify the species and sex of mosquitoes. Therefore, in the next part of the present description specific reference will be made to mosquitoes, without however losing generality.

The device 1 comprises a passage 2 for an insect. Such a passage 2 is provided with an inlet opening 19 in communication with the external environment or with a trap and/or an attraction for insects. The passage 2 is further provided with an outlet opening 12, which is configured to be placed in communication with attraction means (not shown) for one or more species of insects. Preferably, but not necessarily, the outlet opening 12 can be placed in communication with a trap (not shown) which can kill the insects after having attracted them. Alternatively, the outlet opening 12 can be placed in communication with the external environment or with a tank if the insects have already died during the transit within the device 1. The passage 2 has a longitudinal extension axis "A", and is also provided with an identification zone 2a located between the inlet opening 19 and the outlet opening 12. Preferably, the passage 2 is defined by a tube with a rectangular section.

In use, mosquitoes can enter one or more at a time through the inlet opening 19. Preferably, the movement of the mosquitoes through the passage 2 is facilitated by a capture device located immediately downstream of the device 1. For example, the capture device can generate an air flow through the passage 2, from the inlet opening 19 to the outlet opening 12.

The device 1 further comprises image acquisition means 20, in particular associated with the identification zone 2a of the passage 2. The image acquisition means 20 are in particular configured to detect an image of at least one insect transiting in the identification zone 2a.

More specifically, the acquisition means 20 comprise a camera 6 which has an optical axis "B" transversely and preferably perpendicularly arranged with respect to the longitudinal extension axis "A" of the passage 2. In particular, the camera 6 is provided with a macro lens 5, which makes it adapted to acquire insect images with a sufficient resolution for the identification process. The macro lens 5 can be made integrally with the camera 6 or it can be made as a separate component. It should be noted that the transverse section of the passage 2 at the identification zone 2a is such as to hold the entire mosquito within the field depth of the camera lens 6.

In use, the camera 6 can be set in two shooting modes, with the shutter open for long periods and long exposures (frequencies below 1Hz) with its strobe light on, or in burst mode (with shots at a frequency of about 10 Hz or more).

The image acquisition means 20 further comprise lighting means 21 associated with the camera 6. Such lighting means 21 comprise a plurality of light sources 4 facing the identification zone 2b. Such light sources 4 are arranged along a circumference coaxial with the optical axis "B" of the camera 6. The light sources 4 are oriented so as to illuminate the mosquito from every angle.

More in detail, the light sources 4 are preferably embodied in COB LEDs. Such LEDs can be fixed light or strobe, the frequency of any strobe flashing will be controlled by the CPU of the device 1.

The presence of a diffuser filter 9 ensures the diffusion of light inside the passage 2, illuminating the mosquitoes evenly.

To support the light sources 4, the device 1 comprises a support 3, preferably moulded 3d.

It should be noted that the device 1 is provided with a diffusion zone 22 opposite the lighting means 21 with respect to the identification zone 2a. Such a diffusion zone 22 comprises a cavity 11 connected to the passage 2. A transparent panel 10 is arranged between the passage 2 and the cavity 11. Advantageously, the panel 10 forces the mosquito to remain at the right distance from the camera 6 and thus remain in focus during the shooting.

An inner surface 11a of the cavity 11 is uniformly coloured, for example black or white, so as to minimize any reflections, ensuring an effective and optimal contrast of the photographed mosquito. Furthermore, the inner surface 11a allows to limit the possible presence of shadows in the frame.

The device 1 further comprises recognition means 23, which are associated with the image acquisition means 20. The recognition means 23 are configured to process insect images so as to identify the species and/or sex of the insect present in the image.

More specifically, the recognition means 23 comprise a processing unit 8 placed in signal communication with the image acquisition means 20.

In use, the images captured by the camera 6 are transmitted through a cable 7 to the processing unit 8. The images are then pre-processed. Thereafter, the images thus collected can preferably but not necessarily be sent through wireless connection (WiFi, GSM, Lpwan etc.) to a memory unit (not shown).

Subsequently, the images are processed using an artificial intelligence algorithm based on convolutional neural networks, previously trained. Such an algorithm will classify the mosquitoes present in each collected photograph, and will therefore infer the family, species, sex and amount of mosquitoes which passed through the device 1.

The collected data are preferably sent in real time to a display application connected to the recognition device and/or to the mosquito trap. Advantageously, the data can be reprocessed to provide indications of high scientific value regarding the population of mosquitoes present at each site where the device 1 has been installed.

The device 1 can further comprise a satellite geolocation module (not shown) and a local meteorological data detection system (also not shown), comprising a meteorological station provided with a rain gauge, thermometer and hygrometer. This system, together with the data obtained from satellites for multispectral analysis of the Earth's surface, will allow the integration of the information collected by the device 1 to train a further neural network, aimed at predicting the activity and migration flows of the species of mosquitoes which are vectors of infectious diseases in certain areas of investigation where the device 1 has been installed. Advantageously, it is therefore possible to keep track of the possible migrations of the species and families of mosquitoes which are most dangerous to health, also allowing the timely allocation of traps and devices for the protection or fight against mosquitoes in the most sensitive areas, taking into account the seasonality, the information on land use and the historical series of the data collected.

## Claims

1. Device (1) for identifying insects, comprising a passage (2) for an insect having an inlet opening (19) in communication with the external environment and an outlet opening (12) configured to be placed in communication with attraction means for one or more insect species, the passage (2) further having an identification zone (2a) located between the inlet opening (19) and the outlet opening (12); image acquisition means (20) associated with the identification zone (2a) and configured to detect at least one image of an insect transiting in the identification zone; recognition means (23) associated with the image acquisition means (20) and configured to process insect images to identify the species and/or sex of the insect present in the image.

2. Device (1) according to the preceding claim, **characterized in that** the image acquisition means (20) comprise a camera (6) having an optical axis (B) and lighting means (21) associated with the camera (6).

3. Device (1) according to the preceding claim, **characterized in that** the optical axis (B) of the camera (6) is arranged transversely and preferably perpendicularly to a longitudinal extension axis (A) of the passage (2).

4. Device (1) according to claim 2 or 3, **characterized in that** the lighting means (21) comprise a plurality of light sources (4) facing the identification zone (2a) and arranged along a circumference coaxial with the optical axis of the camera (B).

5. Device (1) according to any one of claims 2 to 4, **characterized in that** it comprises a diffusion zone (22) opposite the lighting means (21) with respect to the identification zone (2a).

6. Device (1) according to the preceding claim, **characterized in that** the diffusion zone comprises a cavity (11) connected to the passage (2), a transparent panel (10) arranged between the passage (2) and the cavity (11).

7. Device (1) according to any one of claims 2 to 6, **characterized in that** the recognition means (23) comprise a processing unit (8) placed in signal communication with the image acquisition means (20) and comprising at least one convolutional neural network.
